(19) Europäisches Patentamt
European Patent Office
Office européen des brevets

(11) Veröffentlichungsnummer: **0 181 593 B1**

# (12) EUROPÄISCHE PATENTSCHRIFT

(45) Veröffentlichungstag der Patentschrift: **08.05.91**

(51) Int. Cl.$^5$: **B25J 17/02**

(21) Anmeldenummer: **85114049.1**

(22) Anmeldetag: **05.11.85**

## (54) Gelenkantrieb, insbesondere für Industrieroboter.

(30) Priorität: **12.11.84 DE 3441332**

(43) Veröffentlichungstag der Anmeldung:
**21.05.86 Patentblatt 86/21**

(45) Bekanntmachung des Hinweises auf die Patenterteilung:
**08.05.91 Patentblatt 91/19**

(84) Benannte Vertragsstaaten:
**AT BE CH DE FR GB IT LI LU NL SE**

(56) Entgegenhaltungen:
**EP-A- 0 101 569**
**EP-A- 0 118 012**
**EP-A- 0 128 544**
**FR-A- 2 324 407**
**US-A- 2 006 172**
**US-A- 3 971 266**

**SOVIET INVENTIONS ILLUSTRATED, Woche D31, 9. September 1981, Zusammenfassung Nr. P62 H2117 D/31, Derwent Publications Ltd; & SU - A - 779 063 (E-SIBE TECHN INST)**

(73) Patentinhaber: **Forschungsinstitut für Steuerungstechnik der Werkzeugmaschinen und Fertigungseinrichtungen in der Institutsgemeinschaft Stuttgart e.V. Seidenstrasse 36
W-7000 Stuttgart(DE)**

(72) Erfinder: **Wurst, Karl-Heinz, Dipl.-Ing.
Seidenstrasse 36
W-7000 Stuttgart 1(DE)**

(74) Vertreter: **Patentanwälte Dr. Solf & Zapf
Zeppelinstrasse 53
W-8000 München 80(DE)**

**EP 0 181 593 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf einen Gelenkantrieb nach dem Oberbegriff des Anspruches 1.

Ein Gelenkantrieb dieser Art ist in der SU-A-779 063 beschrieben und dargestellt. Bei diesem bekannten Gelenkantrieb sind die Antriebe an den äußeren Enden der von ihnen angetriebenen radialen Wellen angeordnet. Dabei stehen sie von der sie tragenden Gelenkhälfte radial ab. Hierdurch ist eine große und sperrige Bauweise vorgegeben, die insbesondere im Hinblick auf die im Funktionsbetrieb stattfindende Rotation der Antriebe störend ist. Außerdem ergeben sich im Funktionsbetrieb relativ große Massen.

Ein Gelenkantrieb, bei dem die beiden Gelenkhälften nur um eine quer verlaufende Schwenkachse zueinander verschwenkt werden können, ist in der DE-A- 33 03 555 und in der EP-A- 118 012 beschrieben. Bei diesem Antriebskonzept sind Motor und Getriebe zu einer Einheit zusammengefaßt, wobei Motorteile gleichzeitig Getriebeteile sind. Durch eine zum Motor symmetrische Getriebeanordnung wird eine symmetrische Lastverteilung und damit eine erhöhte mechanische Steifigkeit erzielt. Aufgrund der Verwendung eines Synchronoder Asynchronmotors ist dieser bekannte Gelenkantrieb wartungsfrei, in hohem Maße überlastbar und erfüllt auf einfache Weise die Explosionsschutzanforderungen. Der Gelenkantrieb weist eine hohe Leistungsdichte auf, und er kann vorteilhaft in kleinen Baugrößen ausgeführt werden. Die Einheit kann direkt als Gelenk sowohl für Knick- als auch für Handachsen verwendet werden.

Mit dem bekannten Gelenkantrieb kann eine Drehbewegung bezüglich einer Achse ausgeführt werden, d.h. pro Dreh- bzw. Schwenkachse muß eine Motor-Getriebe-Einheit vorgesehen werden.Da Roboter, Manipulatoren und sonstige automatisch arbeitende Fertigungseinrichtungen gewöhnlich eine Reihe von Dreh- und linearen Bewegungen ausführen sollen, müssen mehrere Drehbewegungen miteinander kombiniert werden bezüglich senkrecht aufeinander stehender Drehachsen, um die gewünschten Bewegungsabläufe ausführen zu können. Es ist daher erforderlich, mehrere solcher bekannter Gelenkantriebe entsprechend der Anzahl der gewünschten Drehachsen miteinander zu kombinieren. Dies führt zu einem größeren mechanischen Aufbau, der infolge der größeren Teileanzahl eine größere Masse mit sich bringt. Infolge der weiter vorne befindlichen Masse, die insbesondere auf die Motoren zurückgeht, ist das dynamische Verhalten vielfach schlecht. Ein weiterer Nachteil besteht darin, daß derzeit bei Verwendung eines kürzeren Arms mit kleineren Motoren gearbeitet werden muß, da keine Adaption möglich ist.

Um alle gewünschten Bewegungen bezüglich der sechs Freiheitsgrade ausführen zu können, werden sechs Antriebseinheiten benötigt. Dies führt zu einer externen Anordnung eines Teils der Motor-Getriebe-Anordnungen, und um das Hängenbleiben von Kabeln und dgl. zu verhindern, müssen die entsprechenden Leitungen relativ eng am und im Arm geführt werden. Dies führt zu einer nachteiligen Anordnung der Gelenkantriebe und Roboter und erschwert das Arbeiten mit ihnen.

Ein weiterer Nachteil bei der Kombination mehrerer Gelenkantriebe und Arme zu einer Robotereinheit besteht darin, daß selbst bei reduziertem Getriebespiel der Einzelanordnungendie gesamte Roboteranordnung insbesondere in bezug auf die hinzukommenden Armlängen ein variables bzw. unbekanntes Spiel aufweist, aufgrund dessen die Genauigkeit, mit der die Gesamtanordnung arbeitet, begrenzt ist.

Zur flexiblen Handhabung von Robotern wird vielfach die sogenannte Cincinnati-Kugel verwendet, bei der der Motor hinten am Arm angeordnet ist und mit dem vorne angeordneten Getriebe über eine komplizierte Mechanik und ein relativ langes Gestänge verbunden ist. Der wesentliche Nachteil dieses bekannten Gelenkantriebs besteht darin, daß die Anordnung nicht steif genug ist und nachgibt, so daß es leicht zu einem ungewünscht großen Spiel kommt. Trotz dieser Nachteile werden mit einem derartigen Gelenkantrieb ausgestattete Roboter insbesondere zum Lackieren von Autokarrosserien eingesetzt, da sie relativ gelenkig und klein sind und somit auch relativ unzugängliche Stellen erreichen können.

Wegen des austretenden Öls können für diesen Anwendungsfall Hydraulikantriebe nicht verwendet werden. Diese Antriebe werfen außerdem wegen ihrer nicht-linearen Eigenschaften bei gleichzeitig geringer Systemdämpfung erhebliche regelungstechnische Probleme auf. Sie sind außerdem sehr teuer, arbeiten mit recht hohem Geräuschpegel und benötigen ständig Wartung.

Es ist ferner bekannt, zum Beispiel für Verzahnungsmaschinen zwei Antriebe, nämlich den Drehtisch- und Schlittenantrieb, zu koppeln. Diese Regelung wird als elektrische Welle bezeichnet.

Des weiteren gibt es Gelenkantriebe, die über im Roboterarm (Gelenk) liegende, getrennte Motoren, Drehbewegungen und Bewegungen über ein weiteres mechanisches Element (Stirnradgetriebe, Hohlwellen, Ketten, Zahnriemen etc.) über ein Differential ausführen. Diese Anordnung ist mechanisch aufwendig (viele Bauteile), in ihrem dynamischen Verhalten durch die zusätzlichen mechanischen Bauelemente schlechter und sie baut "länglich", d.h. es sind Mindestarmlängen von großer Länge für ein Gelenk notwendig. Dies spricht gegen eine beliebige modulare Bauweise. Des weiteren bewirken bei vielen Anwendungsfällen solche länglichen Bauweisen, daß bei Bewegungen des einen Gelenkes große Ausgleichsbewegungen der angekoppelten Elemente durchgeführt werden müssen.

Dadurch, daß Motoren getrennt angebracht sind, kann ihre Leistung nicht für die Hauptbewegungen "Schwenken und Drehen" zusammengeführt werden (DE-OS 33 12 404).

Weiterhin ist ein Differential-Getriebe-Mechanismus bekannt, bei dem über zwei getrennte Motoren und zusätzliche mechanische Antriebselemente zwei Bewegungen abgeleitet werden. Auch diese Art der Anordnung von Motoren und Differential baut sehr groß, ist im dynamischen Verhalten schlecht und baut für ein modulares Konzept zu "länglich".

Der Erfindung liegt die Aufgabe zugrunde, einen Gelenkantrieb zu schaffen, der einen einfachen und kleinen mechanischen Aufbau mit hoher Leistungsdichte besitzt. Diese Aufgabe ist erfindungsgemäß durch die Merkmale des Anspruchs 1 gelöst. Vorteilhafte Weiterbildungen der Erfindung sind in den Unteransprüchen gekennzeichnet.

Durch die Wahl der neuen Anordnung ist es erstmalig möglich, den theoretisch minimalen Raumbedarf für ein Kompaktgelenk zu realisieren. Damit hat man auch erstmalig die Möglichkeit eines kinematisch freizügigen Baukastensystems, um in beliebiger Anzahl auf engstem Raum, wie es z.B. bei Lackier- und Schleifrobotern gewünscht wird, Dreh- und Schwenkbewegungen hintereinander zu schalten. Durch die kompakte autonome Bauweise ist es möglich, Antriebseinheiten so auszutauschen (z . B. größere oder kleinere Antriebselemente), daß sich dies nicht auf die Baugröße (Länge und Querschnitt) der Achsverbindungselemente, d.h. den Raum zwischen zwei Gelenkeinheiten, auswirkt.

Der erfindungsgemäße Gelenkantrieb besitzt einen einfachen und kleinen Aufbau mit einer geringeren Anzahl mechanischer Teile, und die Massenverhältnisse sind wesentlich günstiger. Mit dem erfindungsgemäßen Gelenkantrieb können zwei Drehachsenbewegungen kombiniert, d.h. gleichzeitig und in einem ausgeführt werden, während bei herkömmlichen Antrieben zwei getrennte Schwenk- bzw. Drehbewegungen unabhängig voneinander ausgeführt werden müssen. Infolge der Momententeilung wird die Motorleistung auf zwei Getriebe ausgeübt. Jeder Motor kann jeweils gleichzeitig mit dem anderen für eine Schwenkbewegung um eine bestimmte Achse oder für eine Drehbewegung der zu bewegenden Masse eingesetzt werden. Die für reine Schwenk- bzw. Drehbewegungen benötigten Leistungen der Motoren sind in der Summe kleiner als bei herkömmlichen Gelenkantrieben. Aufgrund der günstigen Anordnung der Drehachse ist ferner das für die Drehbewegung benötigte Moment kleiner als das für die Schwenkbewegung benötigte Moment, und die Summe der für zwei kombinierte Drehachsenbewegungen benötigten Momente ist kleiner als die Summe der bei getrennten Antrieben benötigten Momente. Infolgedessen kann eine bis zu 50% geringere Motorleistung eingesetzt werden, d.h. beispielsweise, es werden zwei 0,5 kW- statt zwei 1 kW-Motoren eingesetzt. Die Verwendung kleinerer Motoren führt wiederum zu günstigeren Massenverhältnissen.

Grundsätzlich können für den erfindungsgemäßen Gelenkantrieb Motoren beliebigen Typs eingesetzt werden. Wegen der Wartungsfreiheit werden jedoch Asynchronmotoren bevorzugt.

Zwar wird wie bisher ein Geschwindigkeits- und Wegmeßsystem pro Motor eingesetzt. Jedoch ist die Anordnung beim erfindungsgemäßen Gelenkantrieb besonders günstig, da sämtliche Meßsysteme nun im Gelenk angeordnet sind, so daß keinerlei Extraleitungen benötigt werden, die mitbewegt werden müssen.

Als Getriebe zur Wandlung von Drehzahl und Momenten werden zweckmäßig ein Kegelradgetriebe und ein Umlaufgetriebe (Planeten- und Harmonic-Drive-Getriebe) verwendet. Harmonic-Drive-Getriebe sind relativ klein und bewirken große Übersetzungen und werden in den meisten Fällen bei Robotern eingesetzt. Nachteilig ist, daß sie regelungstechnisch gesehen nachgiebig sind. Diese Nachgiebigkeit ist beim erfindungsgemäßen Gelenkantrieb durch die doppelte Ausführung, d.h. die Anordnung des geteilten Getriebes um die beiden Antriebsmotoren behoben, so daß sich steife Harmonic-Drive-Getriebe ergeben. Das Außenrad der Umlaufgetriebe ist jeweils starr mit einem Segment eines Kegelrades gekoppelt.

Wegen der Kopplung über das Kegelrad wird bei Ansteuerung der beiden Motoren in der gleichen Richtung eine Schwenkbewegung ausgeführt, während bei gegenläufiger Ansteuerung eine Rotationsbewegung der mit dem Kegelrad gekoppelten Gelenkhälfte bewirkt wird. Die mögliche Leistungsreduktion der Motoren ergibt sich daraus, daß, wie bereits oben erwähnt wurde, für die reine Schwenk- bzw. die reine Drehbewegung die Momente der beiden Motoren zur Verfügung stehen. Bei einer gekoppelten Bewegung, d.h. gleichzeitig erfolgender Dreh- und Schwenkbewegung, findet eine Leistungstrennung statt. Dieser gekoppelte Motorantrieb ermöglicht einen spielfreien Einsatz des erfindungsgemäßen Gelenkantriebs, so daß sich eine mit diesem Gelenkantrieb versehene Anordnung im wesentlichen fehlerfrei bewegen kann. Dies beruht darauf, daß ein selbsttätiges Herausdrehen eines Spiels $\epsilon$ erreicht werden kann,
indem die beiden Motoren leicht gegeneinander verzögert arbeiten. Die eigentliche Größe des Spiels $\epsilon$ kann dabei außer acht gelassen werden, da das Spiel insgesamt durch den im Steuer- und Regelsystm enthaltenen Regelalgorithmus ausgeregelt wird. Auf diese Weise kann die sonst mit großem Aufwand und nicht völlig erfolgende mechanische Korrektur des Spiels vermieden werden, und der Aufbau wird auch hierdurch wesentlich einfacher als bei bekannten Gelenkantriebsanordnungen.

Ein weiterer Vorteil des erfindungsgemäßen Gelenkantriebs besteht darin, daß einseitig gebremst werden kann, während bisher eine Bremse pro Antrieb benötigt wurde. Das heißt, es braucht lediglich eine Bremse für beide Motoren vorgesehen zu werden.

Regelungstechnisch bereitet die erfindungsgemäße kombinierte Antriebseinheit keine Probleme. Es brauchen lediglich ein weiterer Umrichter für den zweiten Motor und eine Kopplung für die beiden Motoren und für die Dreh- und Schwenkbewegungen vorgesehen zu werden.

Der erfindungsgemäße Gelenkantrieb eignet sich nicht nur für Handachsen, sondern auch für Haupt- und Knickachsen. Damit zum Beispiel ein Gelenkroboter sechs Bewegungsfreiheitsgrade aufweist, werden herkömmlich sechs Antriebsanordnungen an sechs Stellen benötigt. Bei Verwendung erfindungsgemäßer Gelenkantriebe und -anordnungen werden zwar wie bisher sechs Antriebseinheiten, Wegmeßsysteme, Steuereinheiten und Leitungen benötigt, jedoch werden diese Teile nur an drei Stellen in dem zusammengebauten Roboter angeordnet, so daß die Anordnung insgesamt wesentlich kompakter und mit weniger Leitungen und dgl. versehen ist, denn es wird pro Gelenk lediglich ein Anschluß benötigt.

Erfindungsgemäße Gelenkeinheiten bzw. -anordnungen sind nicht nur kinematisch unabhängig, sondern besitzen automatisch einen Spielausgleich. Eine Kombination dieser Gelenkanordnungen führt damit anders als bei bekannten Anordnungen nicht zu einer Vergrößerung des Spiels, sondern es wird vielmehr die bei einer Anordnung vorhandene Spielfreiheit weiter beibehalten.

Diese Anordnung ermöglicht es, die erfindungsgemäßen Gelenkantriebe und Gelenkanordungen zu einem Baukastensystem entsprechend dem derzeitigen Trend einzusetzen. Wenn ein mit einem erfindungsgemäßen Gelenkantrieb versehenes Gelenk mit einem Adapter für Ansatzteile versehen wird, können nach Wunsch beliebige Zwischenstücke angesetzt werden und aus diesen Teilen Roboter nach Wunsch zusammengestellt werden. Dies bedeutet, daß selbstverständlich auch bei kürzeren Armen stärkere Antriebsmotoren zum Einsatz kommen können bzw. leistungsfähigere Antriebseinheiten als bisher zur Verfügung stehen.

Kennzeichnend für die neue Anordnung ist auch, gegeben durch die kompakte Bauweise, daß das Gelenk leicht im Arbeitsraum von Werkzeugmaschinen zur Werkzeughandhabung eingebaut werden kann.

Die Erfindung wird im folgenden anhand eines Ausführungsbeispiels näher beschrieben, wobei wesentliche Merkmale in Verbindung mit der Zeichnung erläutert sind. In der Zeichnung zeigen:

- Fig. 1 schematisch eine Veranschaulichung des gekoppelten Schwenk- und Drehantriebs,
- Fig. 2 ein Beispiel eines erfindungsgemäßen Gelenkantriebs,
- Fig. 3 schematisch eine Veranschaulichung einer Steuer- und Regeleinrichtung für den in Fig. 2 gezeigten Gelenkantrieb,
- Fig. 4 ein Beispiel für ein kinematisch freizügiges Baukastensystem.

Figur 1 veranschaulicht schematisch die Kopplung von Schwenk- und Drehbewegung beim erfindungsgemäßen Gelenkantrieb. In dieser Darstellung sind die Gelenkhälften, zwischen denen der erfindungsgemäße Gelenkantrieb wirkt, nicht dargestellt. Die erste Gelenkhälfte ist dabei in Figur 1 unten, und die zweite Gelenkhälfte oben, so daß sich die gezeigte Anordnung im Zwischenraum zwischen den Gelenkhälften befindet. In diesem Raum sind zwei Einheiten bestehend jeweils aus Motor, Getriebe und Meßsystem koaxial zueinander angeordnet, d.h. die jeweiligen Drehachsen $n_1$ und $n_2$ sind zueinander fluchtend in horizontaler Richtung. Die nicht weiter im einzelnen gezeigten Getriebe sind Umlaufgetriebe, deren Achsen mit den Motorachsen fluchtend bzw. zu diesen parallel sind. Zwischen den beiden Motoren ist eine Bremse angeordnet, die auf beide Motoren wirken kann. Die durch die Motordrehachsen verlaufende Achse dient als Achse bezüglich einer Verschwenkung der oberen Gelenkhälfte bezüglich der unteren Gelenkhälfte.

Oberhalb der beiden Anordnungen von Motor, Getriebe und Meßsystem und in Eingriff mit den beiden Getrieben befindet sich ein Kegelrad, an dem sich die Umlaufgetriebe abwälzen können, und dessen Achse senkrecht zur Schwenkachse $n_1/n_2$ verläuft. Bei Drehung des Kegelradgetriebes um seine Achse $n_3$ erfolgt eine Drehung der oberen Gelenkhälfte um diese Achse.

Wenn die beiden Motoren 1 und 2 zusammen angesteuert werden, d.h. wenn die Lageinformationen und die Bewegungsgeschwindigkeiten gleich sind bzw. wenn

$\phi_1 = \phi_2$ und $\dot{\phi}_1 = \dot{\phi}_2$ ist,

dann werden die beiden Motoren beide in eine Drehung in Richtung des oberen oder in Richtung des unteren Pfeils bezüglich ihrer Drehachsen $n_1$ bzw. $n_2$ versetzt und die Gelenkhälfte 2 führt infolge der Kopplung über das Kegelrad eine Schwenkbewegung um die Schwenkachse aus. Wenn

$\phi_1 = \phi_2$ und $\dot{\phi}_2 = -\dot{\phi}_2$ ist,

d.h. wenn die beiden Motoren bezüglich der durch sie beide verlaufenden Schwenkachse gegenläufig mit gleicher Bewegungsgeschwindigkeit angetrieben werden, dann wird die obere Gelenkhälfte um ihre Achse ($n_3$) gedreht. Eine kombinierte Dreh- und Schwenkbewegung ergibt sich durch

$\phi_1 + \xi = \phi_2 - \xi$ bzw.

$\dot{\phi}_1 + \dot{\xi} = \dot{\phi}_2 - \dot{\xi}$

Möglich ist auch der Fall, daß lediglich ein Motor arbeitet. Dann erfolgt eine Drehung der oberen Gelenkhälfte um ihre Achse. Diese Arbeitsweise ist jedoch nur in wenigen Fällen bevorzugt.

Das im Getriebe vorhandene Spiel $\epsilon$ wird herausgedreht, indem die beiden Motoren um dieses Spiel verzögert arbeiten, d.h. indem

$\phi_1 = \phi_2 - \epsilon$

Selbst bei vorhandenem Spiel arbeiten dann die beiden Motoren relativ zueinander so, als ob kein Spiel vorhanden sei.

Im folgenden wird ein Beispiel eines erfindungsgemäßen Gelenkantriebs mehr im einzelnen anhand der Figur 2 veranschaulicht. Wie in Figur 1, ist die eine Gelenkhälfte 1 unten und die zweite Gelenkhälfte 2 oben, und zwischen ihnen befindet sich die aus den beiden Motoren $M_1$ und $M_2$ und den beiden Umlaufgetrieben bzw. -getriebeteilen 11 und 12 sowie den beiden Weg- und Geschwindigkeitsmeßsystemen13, 14 und 15, 16 gebildete Einheit angeordnet. Im gezeigten Beispiel handelt es sich bei den beiden getrennten Motoren $M_1$ und $M_2$ um Asynchronmotoren mit getrennten Rotoren 17, 18 und Statoren 19, 20. Aus der Rotorwelle 23 des Rotors 17 des Motors $M_1$ ist ein Teil herausgebrochen dargestellt, so daß eine mit der Rotorwelle 23 über eine Anordnung von Lagerelementen 22 drehbar verbundene Wellenanordnung 21 sichtbar ist. Mittels dieser Wellenanordnung 21 erfolgt die axiale Ausrichtung der beiden Rotorachsen 23 und 24.

Die beiden Motoren $M_1$ und $M_2$ sind in einer Ausnehmung des Kopfes der Gelenkhälfte 1 angeordnet, die sich zentral in der Gelenkhälfte befindet und nach außen durch zwei gabelförmige Begrenzungsstege 25, 26 begrenzt ist. Außerhalb der Stege befindet sich wiederum eine Ausnehmung 27, 28, die außen durch einen Wandabschnitt 29, 30 der Gelenkhälfte 1 begrenzt ist, wobei die beiden Wandungen 29 und 30 jeweils die Außenwand der Gelenkhälfte 1 bilden. In diesen Ausnehmungen 27 und 28 sind jeweils Umlaufgetriebe 11, 12 angeordnet, die sich in der Zeichnung nach oben aus der Ausnehmung heraus erstrecken. Die Umlaufgetriebe sind jeweils über den Lagern 33, 34 angeordnete Getriebeachsen 35, 36 mit den Rotorachsen 23, 24 gekoppelt. Auf der Außenseite sind die beiden Umlaufgetriebe 11, 12 über Wellenabschnitte 37, 38 in den Außenwandabschnitten 29, 30 gelagert.

Im gezeigten Ausführungsbeispiel sind die Geschwindigkeits- und Wegmeßsysteme jeweils durch einen Abtastkopf 14, 16 und eine Impulsscheibe 13, 15 gebildet. Anstelle einer solchen optischen Einrichtung zur Messung des Rotorpositionswinkels bzw. der Winkellage der ersten Gelenkhälfte zur zweiten Gelenkhäfte kann auch ein magnetisches oder Hall-System verwendet werden. Die Abtastköpfe 14, 16 sind an der Innenseite der Wandabschnitte 25, 26 fest angeordnet, so daß die auf den Getriebeachsen 35, 36 sitzenden Impulsscheiben 13, 15 relativ zu ihnen beweglich sind.

Bei den beiden Umlaufgetrieben kann es sich z.B. um Harmonic-Drive-Getriebe oder um Planetengetriebe handeln. Im gezeigten Ausführungsbeispiel sind Harmonic-Drive-Getriebe eingesetzt, die ein großes Übersetzungsverhältnis von etwa 10 bis 20 bis etwa 100 bis 200 ($n_{ab}$) besitzen. In Eingriff mit den Umlaufgetrieben befindet sich ein Kegelradantrieb 50, was in Figur 2 durch Einzeichnung der beiden L-förmigen Schenkel des Kegelradantriebs in die Umlaufgetriebe angedeutet ist. Der Kegelradantrieb ist in Verbindung mit der Gelenkhälfte 2 angeordnet, wobei die Anordnung und Übersetzung dieses Getriebes, Zwischenräder etc. frei sind. Die Ankoppelung ist durch zwei diagonal von innen nach außen verlaufende strichpunktierte Linien 51, 52 angedeutet. Die Ankoppelung erfolgt in diese Figur 2 über einen Abschnitt 53. Der Abschnitt 53 ist über eine Lageranordnung 37 bis 41 mit der Antriebseinheit verbunden. Die Lageranordnung umfaßt einen stationären Abschnitt 40, der oberhalb der Statoren 17, 18 angeordnet ist. Konzentrisch hierzu ist ein zylindrischer Abschnitt 39 angeordnet, der nach oben im wesentlichen koaxial zur Schwenkwelle angrenzend an den Abschnitt 53 und in diesen über Lagerelemente 41 gelagert ist und unten im Bereich der Gelenkhälfte 1 lediglich schmale gabelförmige Abschnitte aufweist, die in Ausnehmungenaxial innerhalb der Abschnitte 25, 26 und unterhalb der Statoren 19, 20 in Lagerabschnitten 37 gelagert sind.

Figur 3 zeigt ein Beispiel einer Steuerung und Regelung für den in Figur 2 gezeigten Antrieb. Zwei Umrichter 1 und 2 sind für die beiden Asynchronmotoren ASM1, ASM2 vorgesehen. Bei ihnen handelt es sich beispielsweise um Gleichspannungs-Zwischenkreis-Umrichter mit Transistorpulswechselrichtern. Ferner ist eine Phasenstromregelung und eine Regeleinrichtung mit Mikrorechner zur Führung der Motoren in Fluß, Moment, Drehzahl und Lage vorgesehen. Mittels Impulsgebern I werden Zählimpulse von den beiden Motoren zu Zählern Z1, Z2 übermittelt, mittels deren eine Drehzahl- und Lageregelung der Drehachse durchgeführt werden.

In den Mikrorechner werden Sollwerte eingegeben, und es wird eine Systemgrößenentkopplung, Flußführung und Parameterschätzung durchgeführt. Mittels einer D/A-Umwandlung werden Phasenstromsollwerte $i_{R,s}$, $i_{S,s}$, $i_{T,s}$ den Umrichtern 1 bzw. 2 zugeführt, und die Phasenstromistwerte $i_{R,i}$, $i_{S,i}$, $i_{T,i}$ werden jeweils einer Multiplexeranordnung zugeführt und über einen A/D-Wandler digital umgewandelt. Mittels dieser Werte erfolgt dann eine Kopplung der beiden Motorantriebe und der Schwenk- und Drehbewegung. Bevorzugt erfolgt die Drehzahl- und Lageregelung so, daß sie zum einen bezüglich eines Motors und zum anderen bezüglich der Koppelung der beiden Motoren durchgeführt wird.

Figur 4 verdeutlicht die baukastenartige Anordnung mehrerer erfindungsgemäßer Gelenkanordnungen. Es sind mehrere Gelenkantriebe 54 a, b, c unterschiedlicher Größe über unterschiedlich große Adapter 55 und Achsverbindungselemente 56 unterschiedlicher Größe aneinandergereiht. Die Länge der Achsverbindungselemente kann gegen Null gehen. Mit der abgebildeten Anordnung z.B. eines modular aufgebauten Industrieroboters können Drehungen und Schwenkungen in beliebiger Reihenfolge bewirkt werden.

Die in Fig. 1 angedeutete Bremse ist in Fig. 2 als Scheibenbremse 57 eingezeichnet. Sie ist am Statorfundament zwischen den beiden Antrieben befestigt und wirkt gleichzeitig auf beide Rotoren.

## Ansprüche

1. Gelenkantrieb, insbesondere für Industrieroboter, mit zwei kinematisch voneinander unabhängigen und insbesondere rechtwinklig zueinander verlaufenden Wellen, wobei die eine Welle mit den beiden anderen Wellen zweier Antriebe (M1, M2) über ein Differentialgetriebe (11, 12, 50) gekoppelt ist und wobei die Achsen der Wellen der Antriebe koaxial sowohl zueinander als auch zu den beiden sie antreibenden Getriebeteilen des Differentialgetriebes angeordnet sind,
dadurch **gekennzeichnet,**
daß sich die beiden Antriebe (M1, M2) zwischen zwei Getriebeteilen (11, 12) des Differentialgetriebes (11, 12, 50) befinden, wobei die Antriebe (M1, M2) in einer Ausnehmung des Kopfes einer Gelenkhälfte (1 oder 2) und die Getriebeteile (11, 12) außerhalb der Ausnehmung der Gelenkhälfte (1 oder 2) angeordnet sind, und wobei ein drittes Getriebeteil (50) mit der anderen Gelenkhälfte (1 oder 2) in Verbindung steht.

2. Gelenkantrieb nach Anspruch 1,
**dadurch gekennzeichnet,**
daß die andere Gelenkhälfte (2) eine Lageranordnung (37 bis 41) für die zwei Antriebe aufweist.

3. Gelenkantrieb nach Anspruch 2,
**dadurch gekennzeichnet,**
daß am dritten Getriebeteil (53) ein zylindrischer Abschnitt (39) angeordnet ist, dessen Zylinderachse koaxial zu den Achsen der Wellen der Antriebe liegt und das Getriebeteil (53) um die eigene Achse (n3) über Lagerelemente (41) drehbar mit dem zylindrischen Abschnitt (39) in Verbindung steht und wobei der zylindrische Abschnitt (39) in der Ausnehmung des Kopfes, die Antriebe (M1, M2) umbauend, um seine Achse über Lager (37) drehbar gelagert ist.

4. Gelenkantrieb nach Anspruch 3,
**dadurch geknnzeichnet,**
daß der zylindrische Abschnitt (39) gabelförmig ausgebildet ist, wobei stirnseitig lediglich schmale ringförmige Lagerabschnitte vorgesehen sind.

5. Gelenkantrieb nach einem oder mehreren der Ansprüche 1 bis 4,
**dadurch gekennzeichnet,**
daß das dritte Getriebeteil (50) ein Umlaufgetriebe ist.

6. Gelenkantrieb nach einem oder mehreren der Ansprüche 1 bis 5
**dadurch gekennzeichnet,**
daß ein Umlaufgetriebe (11, 12) als Untersetzungsgetriebe zwischen den Antrieben (M1, M2) und den Differentialgetrieben ausgebildet ist.

7. Gelenkantrieb nach Anspruch 6,
**dadurch gekennzeichnet,**
daß das Umlaufgetriebe (11, 12) ein Harmonik-Drive-Getriebe ist.

8. Gelenkantrieb nach Anspruch 6,
**dadurch geknnzeichnet,**
daß das Umlaufgetriebe (11, 12) ein Planetengetriebe ist.

9. Gelenkantrieb nach Anspruch 6,
**gekennzeichnet durch**
ein Umlaufgetriebe (11, 12) und ein Kegelradgetriebe.

10. Gelenkantrieb nach einem oder mehreren der Ansprüche 1 bis 9,
**dadurch gekennzeichnet,**

daß die Antriebe (M1, M2) Asynchronmotoren sind.

**11.** Gelenkantrieb nach einem oder mehreren der Ansprüche 1 bis 9,
**dadurch gekennzeichnet,**
daß die Antriebe (M1, M2) Synchronmotoren sind.

**12.** Gelenkantrieb nach einem oder mehreren der Ansprüche 1 bis 11,
**dadurch gekennzeichnet,**
daß zwischen den beiden Antrieben (M1, M2) eine auf beide Antriebe wirkende Bremse (57) angeordnet ist.

**13.** Gelenkantrieb nach einem oder mehreren der Ansprüche 1 bis 12,
**dadurch gekennzeichnet,**
daß die Rotoren (23, 24) der beiden Antriebe (M1, M2) beweglich ineinander gelagert sind.

**14.** Gelenkantrieb nach einem oder mehreren der Ansprüche 6 bis 13,
**dadurch gekennzeichnet,**
daß das Umlaufgetriebe (11, 12) geteilt ist und jeder Umlaufgetriebeteil jeweils mit einem Motor gekoppelt ist.

**15.** Gelenkantrieb nach einem oder mehreren der Ansprüche 9 bis 14,
**dadurch gekennzeichnet,**
daß das Außenrad des Umlaufgetriebes (11, 12) jeweils mit einem Kegelrad oder Kegelradsegment starr gekoppelt ist.

**16.** Gelenkantrieb nach einem oder mehreren der Ansprüche 1 bis 15,
**gekennzeichnet durch** ein Steuer- und Regelsystem mit jeweils einem Umrichter für die Motoren (M1, M2), einer Regeleinrichtung zur Führung der Motoren in Fluß, Moment, Drehzahl und Lage und einer Einrichtung zur Kopplung der beiden Motoren und zur Kopplung von Schwenk- und Drehbewegung.

**17.** Gelenkantrieb nach Anspruch 16,
**gekennzeichnet durch** einen Regelalgorithmus der das Spiel herausdreht.

**18.** Verwendung des Gelenkantriebes nach einem oder mehreren der Ansprüche 1 bis 17 für ein Handgelenk.

**19.** Verwendung des Gelenkantriebes nach einem der Ansprüche 1 bis 18 für ein Haupt- bzw. Knickgelenk.

**20.** Gelenkanordnung,
**gekennzeichnet durch** einen Gelenkantrieb nach einem der Ansprüche 1 bis 19 und Adapter (55) an den Gelenkhälften und vorzugsweise Achsverbindungselemente (56) an den Adaptern.

**21.** Gelenkanordnung nach Anspruch 20,
**dadurch gekennzeichnet,**
daß zwei oder drei Gelenkanordnungen mit Armen gewünschter Art und Länge versehen sind und zu einer Roboteranordnung kombiniert sind.

**22.** Gelenkanordnung nach Anspruch 20 oder 21,
**gekennzeichnet durch** die Kombinationen mit zumindest einer Gelenkanordnung mit einem herkömmlichen Gelenkantrieb.

## Claims

**1.** Articulated joint, for use in particular with industrial robots and comprising two kinematically independent shafts rotating in particular at right angles in respect of one another, with one of these shafts being connected to the output shafts of two drive systems (M1, M2) by means of a differential gear system (11, 12, 50) and with the axes of these drive shafts being arranged coaxially in relation to each other and to the two components of the differential gear system that drive them respectively, **characterized in that** the twodrive systems (M1, M2) are arranged inside a recesss in the upper part of one half of the joint (1 or 2) between two drive components (11, 12) of the differential drive system (11, 12, 50) and that the said drive components (11, 12) are arranged outside the recess in the upper part of the joint section (1 or 2), with a third drive component (50) being connected to the other half of the joint (1 or 2).

**2.** Articulated joint according to claim 1 above, **characterized in that** the other half of the joint (2) comprises a bearing arrangement (37 to 41) for the two drive systems.

**3.** Articulated joint according to claim 2 above, **characterized in that,** on the third drive component (53), a cylindrical passage (39) has been cut, the axis of which is coaxial in relation to the axes of the drive shafts and that the drive component (53) is connected in a rotary manner through its own axis (n3) and via bearing elements (41) with the cylindrical passage (39), while this latter itself can rotate via bearings (37) through its own axis in the recessed portion of the upper part of the joint that houses the drive systems (M1, M2).

4. Articulated joint according to claim 3 above, **characterized in that** the cylindrical passage is forked in shape and is provided at the front end with a number of small, ring-shaped bearing sections.

5. Articulated joint according to one or more of the claims 1 to 4 above, **characterized in that** the third drive component (50) is in the form of an epicyclic gear.

6. Articulated joint according to one or more of the claims 1 to 5 above, **characterized in that** an epicyclic gear system (11, 12) operates as a reducing gear between the drive systems (M1, M2) and the differential gear system.

7. Articulated joint according to claim 6 above, **characterized in that** the epicyclic gear system (11, 12) is a harmonic drive gear system.

8. Articulated joint according to claim 6 above, **characterized in that** the epicyclic gear system (11, 12) is a planetary gear system.

9. Articulated joint according to claim 6 above, **characterized by** an epicyclic gear (11, 12) and a bevel gear system.

10. Articulated joint according to one or more of the claims 1 to 9, **characterized in that** the drive systems (M1, M2) are asynchronous motors.

11. Articulated joint according to one or more of the claims 1 to 9, **characterized in that** the drive systems (M1, M2) are synchronous motors.

12. Articulated joint according to one or more of the claims 1 to 11 above, **characterized in that** a brake (57) acting on both drive systems is arranged between the two drive systems (M12, M2).

13. Articulated joint according to one or more of the claims 1 to 12 above, **characterized in that** the rotors (23, 24) of the two drive systems (M1, M2) are mounted in such a way that they can be mutually engaged.

14. Articulated joint according to one or more of the claims 6 to 13 above, **characterized in that** the epicyclic gear system is divided and each divided section is coupled to one of the drive motors.

15. Articulated joint according to one or more of the claims 9 to 14 above, **characterized in that** the outer wheel of the epicyclic gear system (11, 12) is coupled in a rigid manner to either a bevel gear or a bevel gear segment.

16. Articulated joint according to one or more of the claims 1 to 15 above, **characterized by** a control and regulating system, comprising an inverter for the motors (M1, M2), a regulating device for controlling the current, the torque, the speed and the position of the motors and a device for coupling the two motors and for coupling their rotating and turning movements.

17. Articulated joint according to claim 16 above **characterized by** a control algorithm for reducing the amount of play.

18. The use of an articulated joint according to one or more of the above claims 1 to 17 as a wrist joint.

19. The use of an articulated joint according to one or more of the above claims 1 to 18 for a main or for an articulated joint.

20. Articulated system, **characterized by** an articulated joint according to one or more of the claims 1 to 19 above and by adapters (55) fitted to the two halves of the joint and preferably by linear connectors (56) to the adapters.

21. Articulated system, according to claim 20 above, **characterized in that** two or three articulated systems are fitted with arms of the required type and length and are thus combined to form a robot arrangement.

22. Articulated system, according to claim 20 or 21 above, **characterized by** the combination of at least one articulated system having a conventional articulated joint.

## Revendications

1. Articulation motorisée, en particulier pour robot industriel, comportant deux arbres cinématiquement indépendants l'un de l'autre, et en particulier disposés perpendiculairement l'un par rapport à l'autre, l'un des arbres étant couplé avec les deux autres arbres de deux entraînements (M1, M2) par l'intermédiaire d'un réducteur différentiel (11, 12, 50) et les axes des arbres des entraînements étant disposés coaxialement aussi bien l'un par rapport à l'autre que par rapport aux deux parties du réducteur différentiel qui les entraînent, caractérisée en ce que les deux entraînements (M1, M2) se trouvent entre deux parties (11, 12) du réducteur différentiel (11, 12, 50), les moteurs (M1, M2) étant disposés dans une cavité de la tête d'une demi-articulation (1 ou 2) et les parties (11, 12) du réducteur étant disposées en dehors de la cavité des demi-articulations (1 ou 2), et une troisième partie (50) du réducteur étant reliée avec l'autre demi-articulation (1 ou 2).

**2.** Articulation motorisée suivant la revendication 1, caractérisée en ce que l'autre demi-articulation (2) présente un dispositif de palier (37 à 41) pour les deux moteurs.

**3.** Articulation motorisée suivant la revendication 2, caractérisée en ce que, sur la troisième partie de réducteur (53), est disposé un élément cylindrique (39), dont l'axe du cylindre est coaxial par rapport aux axes des arbres des entraînements et dont la partie de réducteur (53) est raccordée, en pouvant tourner autour de son propre axe ($n_3$), avec l'élément cylindrique (39), par l'intermédiaire d'organes de palier (41), et étant entendu que l'élément cylindrique (39) est monté tournant autour de son axe dans la cavité de la tête, au moyen de paliers (37), en entourant les moteurs (M1, M2)

**4.** Articulation motorisée suivant la revendication 3, caractérisée en ce que l'élément cylindrique (39) est réalisé en forme de fourches, étant entendu que, sur la face frontale, sont simplement prévus des éléments de palier étroits, en forme d'anneaux.

**5.** Articulation motorisée suivant l'une ou plusieurs des revendications 1 à 4, caractérisée en ce que la troisième partie de réducteur (50) est un engrenage épicycloïdal.

**6.** Articulation motorisée suivant l'une ou plusieurs des revendications 1 à 5, caractérisée en ce qu'un réducteur épicycloïdal (11, 12) est réalisé comme démultiplicateur entre les moteurs (M1, M2) et les réducteurs différentiels.

**7.** Articulation motorisée suivant la revendication 6, caractérisée en ce que le réducteur épicycloïdal (11, 12) est un réducteur à commande harmonique (harmonic drive).

**8.** Articulation motorisée suivant la revendication 6, caractérisée en ce que le réducteur épicycloïdal (11, 12) est un réducteur planétaire.

**9.** Articulation motorisée suivant la revendication 6, caractérisée par un réducteur épicycloïdal (11, 12) et un réducteur à engrenages coniques.

**10.** Articulation motorisée suivant l'une ou plusieurs des revendications 1 à 9, caractérisée en ce que les moteurs (M1, M2) sont des moteurs asynchrones.

**11.** Articulation motorisée suivant l'une ou plusieurs des revendications 1 à 9, caractérisée en ce que les moteurs (M1, M2) sont des moteurs synchrones.

**12.** Articulation motorisée suivant l'une ou plusieurs des revendications 1 à 11, caractérisée en ce qu'entre les deux moteurs (M1, M2) est disposé un frein (57) agissant sur les deux moteurs.

**13.** Articulation motorisée suivant l'une ou plusieurs des revendications 1 à 12, caractérisée en ce que les rotors (23, 24) des deux entraînements (M1, M2) sont montés l'un dans l'autre, de façon mobile.

**14.** Articulation motorisée suivant l'une ou plusieurs des revendications 6 à 13, caractérisée en ce que le réducteur épicycloïdal (11, 12) est partagé et en ce que chaque partie concernée du réducteur épicycloïdal est couplée, chaque fois, avec un moteur.

**15.** Articulation motorisée suivant l'une ou plusieurs des revendications 9 à 14, caractérisée en ce que la roue extérieure du réducteur épicycloïdal (11, 12) est, chaque fois, accouplée rigidement avec une roue conique ou un segment de roue conique.

**16.** Articulation motorisée suivant l'une ou plusieurs des revendications 1 à 15, caractérisée par un système de commande et de régulation comportant un convertisseur de fréquence pour chacun des moteurs (M1, M2), un dispositif, pour la conduite des moteurs, de régulation en flux, en couple, en vitesse de rotation et en position, et un dispositif pour le couplage des deux moteurs et pour le couplage du mouvement de basculement et de rotation.

**17.** Articulation motorisée suivant la revendication 16, caractérisée par un algorithme de régulation qui élimine le jeu.

**18.** Utilisation de l'articulation motorisée suivant l'une ou plusieurs des revendications 1 à 17, pour un joint de poignet.

**19.** Utilisation de l'articulation motorisée suivant l'une quelconque des revendications 1 à 18, pour un joint principal et un joint à pivotement.

**20.** Dispositif d'articulation, caractérisé par une articulation motorisée suivant l'une quelconque des revendications 1 à 19, et par un adaptateur (55) sur les demi-articulations et, de préférence, par des organes de liaison d'axe (56) sur les adaptateurs.

**21.** Dispositif d'articulation suivant la revendication 20, caractérisé en ce que deux ou trois dispositifs d'articulation sont munis de bras du type et de la longueur que l'on souhaite et sont combinés pour constituer un ensemble de robot.

**22.** Dispositif d'articulation suivant la revendication 20 ou la revendication 21, caractérisé par les combinaisons d'au moins un dispositif d'articulation avec une articulation motorisée habituelle.

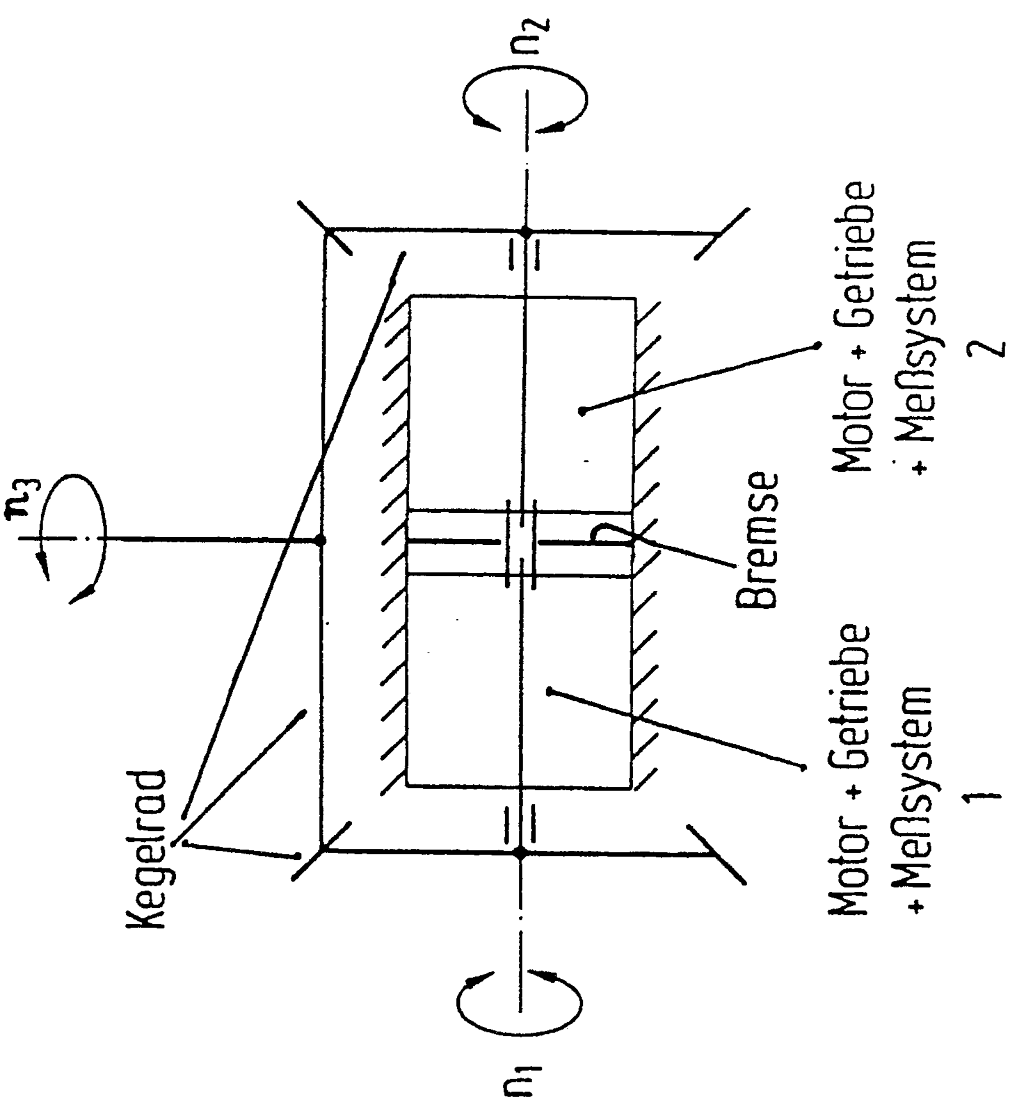
$n_2$
$n_3$
$n_1$
Kegelrad
Bremse
Motor + Getriebe
+ Meßsystem
2
Motor + Getriebe
+ Meßsystem
1

Fig. 1

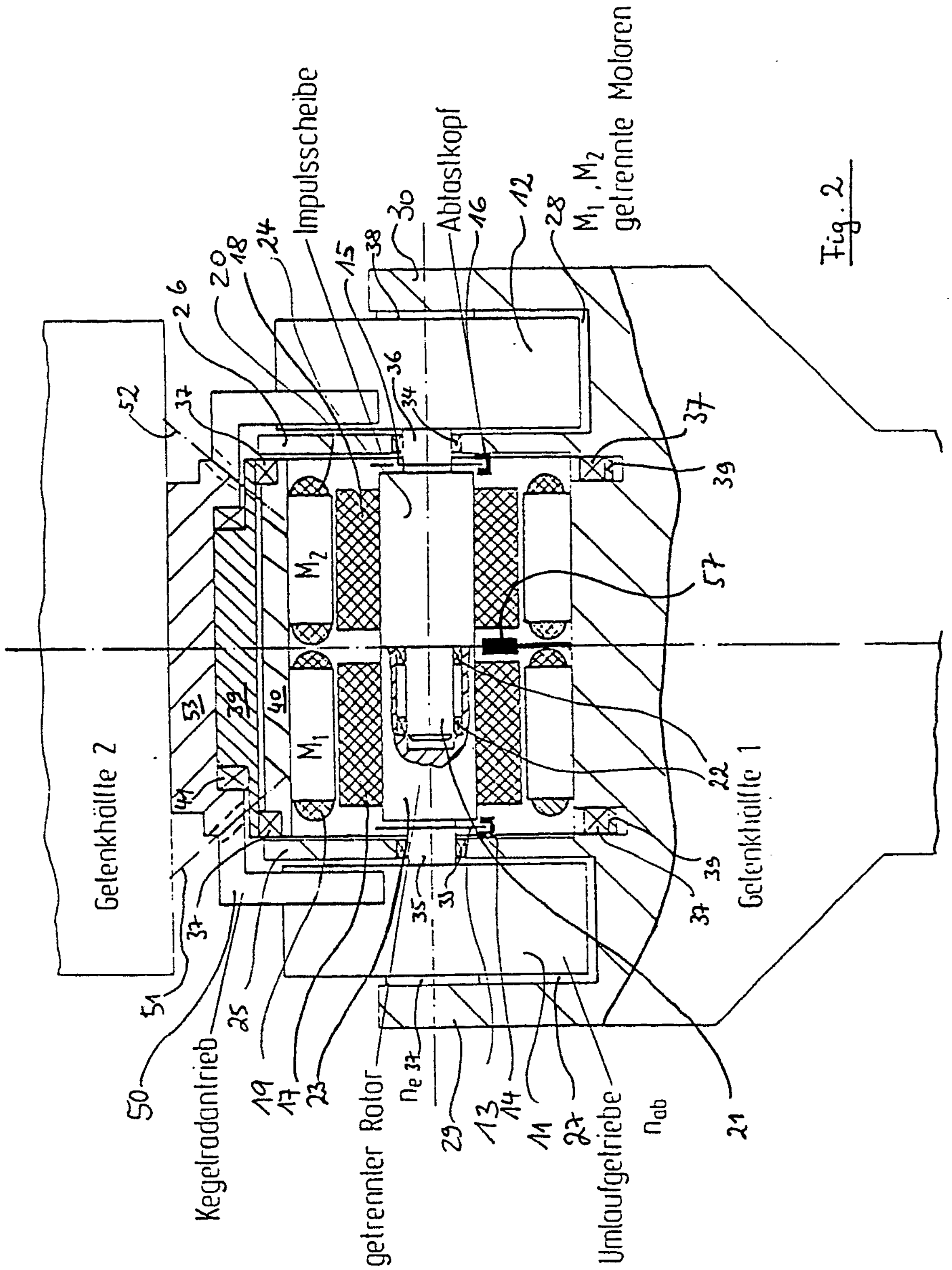

Gelenkhälfte 2
Gelenkhälfte 1
Kegelradantrieb
getrennter Rotor
$n_e$
Umlaufgetriebe
$n_{ab}$
Impulsscheibe
Abtastkopf
$M_1$, $M_2$ getrennte Motoren
$M_1$
$M_2$


Fig. 2

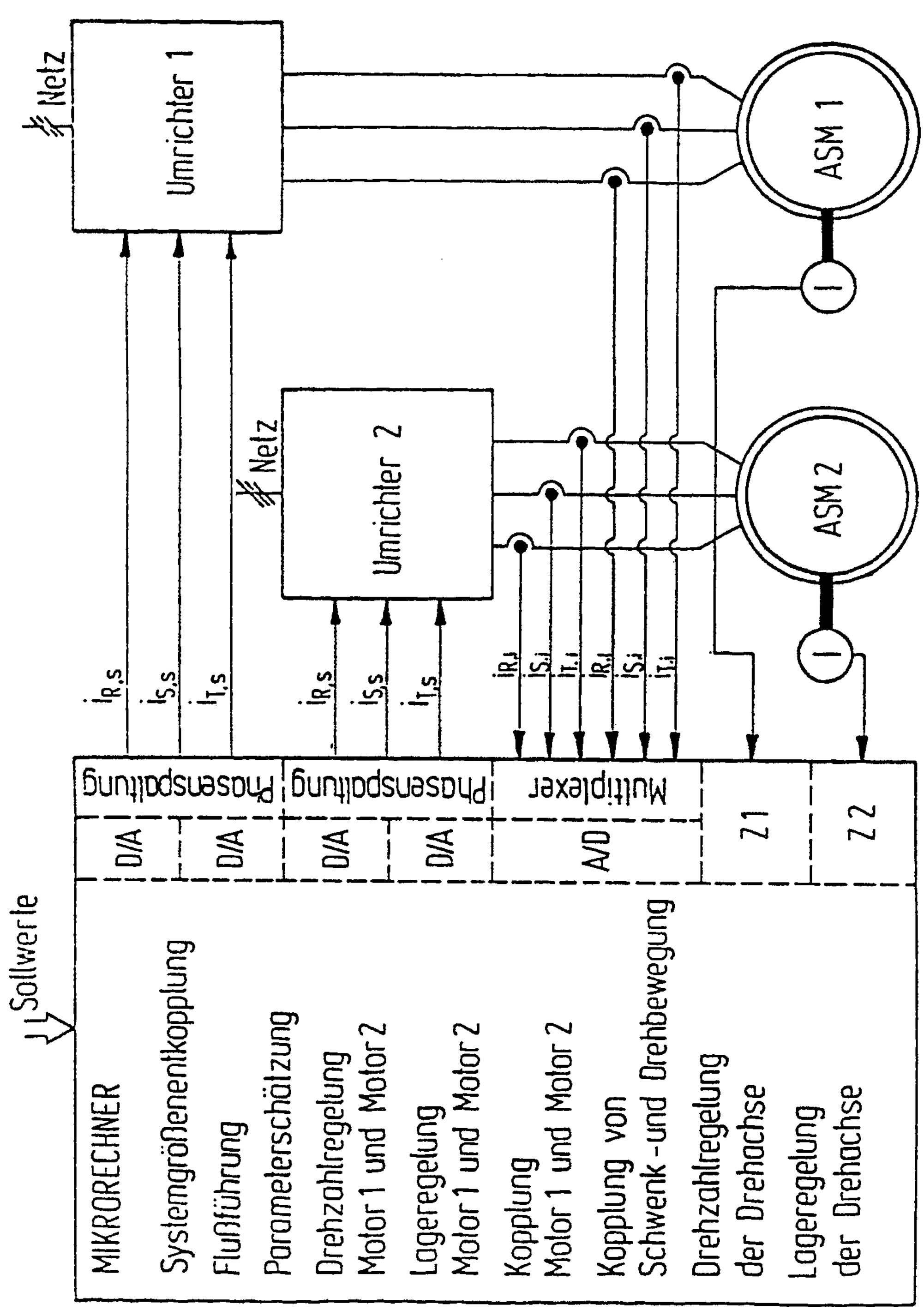


ASM...Asynchronmotor I...Impulsgeber Z...Zähler Richtungsdiskriminator

Fig. 3

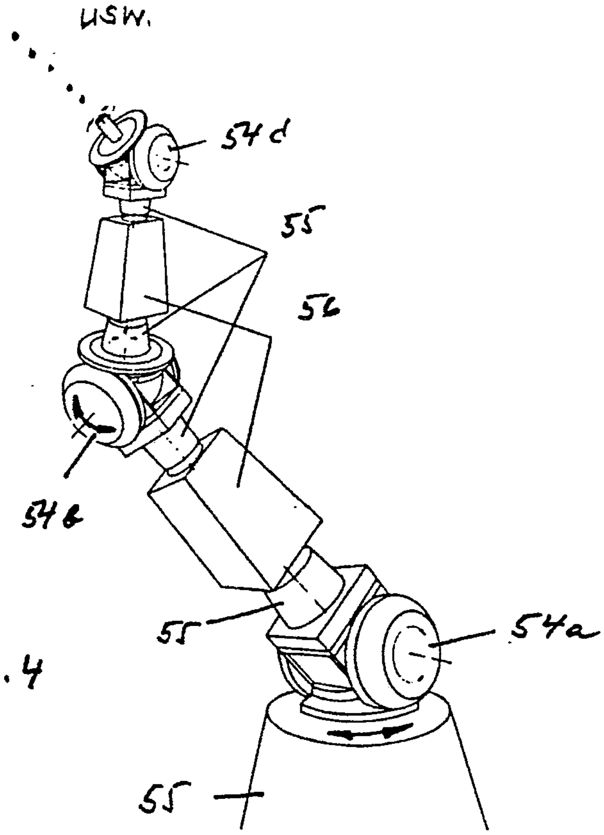


Fig. 4